Europäisches Patentamt

European Patent Office

Office européen des brevets

(11) Veröffentlichungsnummer: **0 472 761 A1**

# EUROPÄISCHE PATENTANMELDUNG

(21) Anmeldenummer: **90116570.4**

(22) Anmeldetag: **29.08.90**

(51) Int. Cl.5: **B64D 11/06**, A47C 7/18

(43) Veröffentlichungstag der Anmeldung:
**04.03.92 Patentblatt 92/10**

(84) Benannte Vertragsstaaten:
**AT BE CH DE DK ES FR GB GR IT LI LU NL SE**

(71) Anmelder: **METZELER SCHAUM GMBH**
**Donaustrasse 51**
**W-8940 Memmingen(DE)**

(72) Erfinder: **Steinhöfel, Helmut, Dipl.-Chem.**
**Johann-Sebastian-Bach-Strasse 66**
**W-8942 Ottobeuren(DE)**

(74) Vertreter: **Seibert, Rudolf, Dipl.-Ing. et al**
**Tattenbachstrasse 9**
**W-8000 München 22(DE)**

(54) **Sitzpolster, insbesondere für Fluggastsitze.**

(57) Bei einem Sitzpolster (1) insbesondere für einen Fluggastsitz ist zur Verwendung dieses Sitzpolsters als Schwimmhilfe anstelle einer Schwimmweste und für die Erzielung der dafür erforderlichen hohen Auftriebskräfte erfindungsgemäß vorgesehen, daß als Schaumstoff mit hohem Auftrieb Polyimid-Schaumstoff (5) verwendet ist, der einen Teil des Sitzpolstervolumens ausfüllt.

EP 0 472 761 A1

Die Erfindung bezieht sich auf ein Sitzpolster, insbesondere für Fluggastsitze, aus einem flammwidrig ausgerüsteten, elastischen Polyurethan-Schaumstoff, das durch einen Anteil eines Schaumstoffs mit höherer Auftriebskraft als Schwimmhilfe einsetzbar ist.

Eine Reihe von Fluggesellschaften verwenden zur Rettung von Flugpassagieren bei Notwasserungen nicht mehr gesonderte Schwimmwesten, sondern rüsten die Sitzpolster der Fluggastsitze so aus, daß diese selbst als Schwimmhilfe mit den notwendigen Auftriebskräften verwendet werden können. Für die Erzielung des notwendigen Auftriebes ist es bisher üblich, Einlagen aus Polyethylen-Schaum zu verwenden. Nach den Berechnungen, für den erforderlichen Auftrieb ist dabei pro Sitzkissen ein Polyethylen-Schaum-Anteil von etwa 7 dm$^3$ pro Sitzkissen notwendig und ausreichend. Die Verwendung derartigen Polyethylen-Schaumes hat jedoch den Nachteil, daß sich dieser Schaumstoff nicht direkt in das übrige Sitzpolster aus Polyurethan-Schaumstoff einschäumen läßt, da Polyethylen-Schaum eine so schaumabweisende Wirkung aufweist, daß er damit praktisch einem Trennmittel gleichkommt. Ein weiterer Nachteil dieses Polyethylen-Schaumes ist, daß er sehr leicht brennt und daß daher der Polyethylen-Schaum-Anteil in einem solchen Sitzpolster vollständig von feuerhemmenden Materialien, insbesondere einem flammwidrig ausgerüsteten Schaumstoff umgeben sein muß, um den Brandtest gemäß FAR zu 25853c zu bestehen.

Auch bei zusätzlicher Verwendung eines solchen Schaumstoffs mit hohen Auftriebskräften darf aber das Gesamtvolumen des Sitzpolsters nicht größer werden. Da aber der genannte Polyethylen-Schaum ganz von flammwidrig ausgerüstetem Polyurethan-Schaum eingehüllt ist, ist wegen des einzuhaltenden Gesamtvolumens die Polyurethan-Schaumstofflage oberhalb des Polyethylen-Schaums zur Bildung der eigentlichen Sitzfläche nur noch sehr dünn, wodurch ein erheblicher Verlust an Sitzkomfort auftritt. Dies insbesondere deshalb, weil Polyethylen-Schaum ein sehr hartes, brettiges Sitzempfinden vermittelt.

Der vorliegenden Erfindung liegt daher die Aufgabe zugrunde, ein Sitzpolster mit ausreichend hoher Auftriebskraft zu schaffen, dessen Sitzkomfort gegenüber einem herkömmlichen Sitz praktisch unverändert ist, das aber gleichzeitig sehr einfach herzustellen ist und allen Anforderungen an die Schwerentflammbarkeit genügt.

Zur Lösung dieser Aufgabe ist erfindungsgemäß vorgesehen, daß als Schaumstoff mit hohem Auftrieb Polyimid-Schaumstoff verwendet ist, der einen Teil des Sitzpolster-Volumens ausfüllt.

Bei diesem Polyimid-Schaum handelt es sich um einen Schaumstoff aus aromatischen Aminen, der physikalisch getrieben ist und in Raumgewichten bis zu einer Untergrenze von 7 kg/m$^3$ erhalten werden kann. Ein wesentlicher Vorteil dieses Polyimid-Schaumes besteht darin, daß er selbst nicht brennt und sich sehr gut mit anderen Schaumstoffen verbindet. Durch sein sehr niedriges Raumgewicht kann das erforderliche Volumen für diesen Schaumstoff-Anteil noch weiter reduziert werden, um dennoch den notwendigen Auftrieb zu erhalten, was sich insbesondere auf den verbleibenden Sitzkomfort positiv auswirkt.

Zweckmäßigerweise bildet dabei der Polyimid-Schaumstoff den unteren, der Sitzfläche abgewandten Bereich des Sitzpolsters.

Ferner kann der Polyurethan-Schaumstoffbereich unmittelbar an den Polyimid-Schaumstoffbereich angeschäumt sein.

Bei einem Verfahren zur Herstellung eines solchen Sitzpolsters ist erfindungsgemäß vorgesehen, daß in einer zweiteiligen Schäumform entsprechende Polyimid-Schaumstoffzuschnitte am Deckel der Schäumform befestigt und während des Ausschäumens des verbleibenden Formen-Hohlraumes mit flammwidrig ausgerüstetem Polyurethan-Schaum mit diesem formschlüssig verankert werden. Damit ist also auch ein sehr einfaches Herstellungsverfahren gegeben, bei dem gleichzeitig eine feste Verbindung des Polyimid-Schaumes mit den Polyurethan-Schaumstoffbereichen sicher gewährleistet ist.

Anhand einer schematischen Zeichnung werden Aufbau und Funktionsweise eines Ausführungsbeispiels nach der Erfindung näher erläutert.

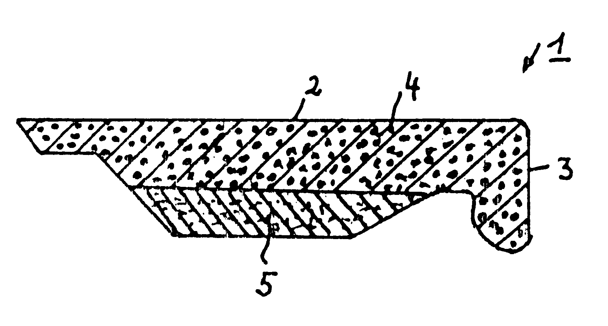

Dabei zeigt die einzige Figur einen Längsschnitt durch ein derartiges Sitzpolster.

Aus dem dargestellten Längsschnitt ist die übliche Kontur eines Sitzpolsters 1 für einen Fluggastsitz dargestellt, an den sich am linken Ende üblicherweise die nicht dargestellte Rückenlehne anschließt. Dieser Fluggastsitz 1 mit der oben liegenden Sitzfläche 2 und der vorderen Sitzkante 3 besteht üblicherweise aus einem formgeschäumten oder entsprechend zugeschnittenen weichelastischen Polyurethan-Schaumstoff mit einem Raumgewicht von etwa 64 kg/m$^3$, der mit einer speziellen Rezeptur flammwidrig ausgerüstet ist, um den Brandtest gemäß FAR 25853c zu bestehen.

Um einem solchen Sitzpolster 1 den notwendigen Auftrieb zu verleihen, damit er als Schwimmhilfe tauglich ist, ist nach der Erfindung der untere Bereich des Sitzpolsters 1 durch einen entsprechenden Abschnitt 5 aus Polyimid-Schaumstoff mit einem Raumgewicht von 7 kg/m$^3$ ausgebildet.

Da dieser Polyimid-Schaumstoff 5 selbst nicht brennt, ist es auch nicht erforderlich, daß er allseitig von flammwidrig ausgerüstetem Polyurethan-Schaumstoff umgeben ist, sondern dieser Polyimid-Schaumstoffbereich kann außer seiner Verbindungsfläche mit dem Polyurethan-Schaumstoff frei liegen und wird daher zweckmäßigerweise an der Unterseite des Sitzpolsters 1 angeordnet, so daß die untere Grenzfläche des Polyimid-Schaumbereiches 5 voll sichtbar bleibt.

Durch diese Anordnung des Polyimid-Schaumstoffbereichs im Sitzpolster kann er auch direkt in der Fluggastsitzform an den Polyurethan-Schaum angeschäumt werden.

Dazu ist es zweckmäßig, wenn bei einer üblicherweise zweigeteilten Schäumform entsprechende Polyimid-Schaumstoffzuschnitte auf der Innenseite des Formendeckels befestigt und nach Schließen der Form während des Aufschäumens des eigentlichen Polyurethan-Schaumstoffgemisches formschlüssig mit dem Polyurethan-Schaumstoff verbunden werden. Damit ergibt sich dann ein einstückiges Sitzpolster mit Bereichen sehr unterschiedlichen spezifischen Gewichtes, das insgesamt aber den erforderlichen Auftrieb gewährleistet.

Durch einen geringeren Masseneinsatz an Polyimid-Schaumstoff und einem wegen seiner Nichtbrennbarkeit möglichen Verzicht auf eine untere außen liegende Abdeckung aus flammwidrig ausgerüsteten Polyurethan-Schaumstoff kann eine wesentlich stärkere Schaumstofflage zwischen den Polyimid-Schaum 5 und der Sitzfläche 2 vorgesehen werden, so daß dadurch der Gesamtsitzkomfort gegenüber einem Sitzpolster aus reinem Polyurethan-Schaumstoff kaum vermindert wird.

Insgesamt ergibt sich also ein Sitzpolster, das vollvolumig flammwidrig gestaltet ist, wobei der Einfluß des Polyimid-Schaumstoffbereiches auf den üblichen Brandtest eher günstiger ist, bei dem der Sitzkomfort gegenüber einem Sitzpolster aus einheitlichem Material nicht vermindert ist, und das darüber hinaus noch sehr einfach hergestellt werden kann.

**Patentansprüche**

1. Sitzpolster, insbesondere für Fluggastsitze, aus einem flammwidrig ausgerüsteten, elastischen Polyurethan-Schaumstoff, das durch einen Anteil eines Schaumstoffs mit höherer Auftriebskraft als Schwimmhilfe einsetzbar ist, dadurch gekennzeichnet, daß als Schaumstoff mit hohem Auftrieb Polyimid-Schaumstoff verwendet ist, der einen Teil des Sitzpolster-Volumens ausfüllt.

2. Sitzpolster nach Anspruch 1, dadurch gekennzeichnet, daß ein Polyimid-Schaumstoff mit einem Raumgewicht von 7 kg/m$^3$ verwendet ist.

3. Sitzpolster nach Anspruch 1 und 2, dadurch gekennzeichnet, daß der Polyimid-Schaumstoff den unteren, der Sitzflächen abgewandten Bereich (5) des Sitzpolsters (1) bildet.

4. Sitzpolster nach Anspruch 3, dadurch gekennzeichnet, daß der Polyurethan-Schaumstoffbereich (4) unmittelbar an den Polyimid-Schaumstoffbereich(5) angeschäumt ist.

5. Verfahren zur Herstellung eines Sitzpolsters nach Anspruch 4, dadurch gekennzeichnet, daß in einer zweiteiligen Schäumform entsprechende Polyimid-Schaumstoffzuschnitte am Deckel der Schäumform befestigt und während des Ausschäumens des verbleibenden Formen-Hohlraumes mit flammwidrig ausgerüstetem Polyurethan-Schaum mit diesem formschlüssig verankert werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 369 262  (R.I. JUDD)<br>* Spalte 1, Zeile 1 - Spalte 2, Zeile 38; Figur 1 *<br>– – – | 1-5 | B 64 D 11/06<br>A 47 C 7/18 |
| Y | EP-A-0 343 999  (ETHYL CO.)<br>* Seite 2, Zeilen 1 - 16 * * Seite 9, Zeilen 56 - 58 *<br>– – – | 1-5 | |
| Y | US-A-4 405 681  (MCEVOY)<br>* Spalte 1, Zeile 36 - Spalte 2, Zeile 25; Figuren *<br>– – – | 4,5 | |
| A | US-A-4 750 443  (BLAUSTEIN ET AL.)<br>* Spalte 1, Zeilen 17 - 20 * * Spalte 3, Zeilen 7 - 11 *<br>– – – – – | 1 | |

**RECHERCHIERTE SACHGEBIETE (Int. Cl.5)**

B 64 D
A 47 C
B 32 B

Der vorliegende Recherchenbericht wurde für alle Patentansprüche erstellt

| Recherchenort | Abschlußdatum der Recherche | Prüfer |
|---|---|---|
| Den Haag | 11 April 91 | ESTRELA Y CALPE J. |